## Europäisches Patentamt

(19) **European Patent Office**

**Office européen des brevets**

(11) Veröffentlichungsnummer: **0 092 056**
**B1**

(12) ## EUROPÄISCHE PATENTSCHRIFT

(45) Veröffentlichungstag der Patentschrift:
**08.01.86**

(51) Int. Cl.⁴: **A 47 J 42/04,** A 47 G 19/24

(21) Anmeldenummer: **83102647.1**

(22) Anmeldetag: **17.03.83**

(54) **Gewürzspender.**

(30) Priorität: **19.04.82 DE 3214293**
**06.12.82 DE 3245065**

(43) Veröffentlichungstag der Anmeldung:
**26.10.83 Patentblatt 83/43**

(45) Bekanntmachung des Hinweises auf die Patenterteilung:
**08.01.86 Patentblatt 86/2**

(84) Benannte Vertragsstaaten:
**AT BE CH DE FR GB IT LI LU NL SE**

(56) Entgegenhaltungen:
**DE - A - 2 222 865**
**DE - A - 2 413 900**
**DE - U - 1 749 181**
**DE - U - 1 926 830**
**DE - U - 8 133 868**
**US - A - 3 371 874**
**US - A - 3 381 859**
**US - A - 4 304 363**

(73) Patentinhaber: **Hofmann GmbH, Kreuzstrasse 11,**
**D-6983 Kreuzwertheim (DE)**

(72) Erfinder: **Beilstein, Kurt Hans-Joachim, Niedergründauer**
**Strasse 2, D-6456 Langensenbold (DE)**

(74) Vertreter: **Reinhard, Skuhra, Weise, Leopoldstrasse 51,**
**D-8000 München 40 (DE)**

ACTORUM AG

## Beschreibung

Die Erfindung betrifft einen Gewürzspender gemäss dem Oberbegriff des Patentanspruchs 1.

Ein Gewürzspender gemäss dem Oberbegriff des Patentanspruchs 1 ist aus der DE-A Nr. 2222865 bekannt. Bei diesem Gewürzspender ist die Gewürzmühle mit Mahlgutkammer in Horizontalrichtung neben einer Gewürzkammer liegend vorgesehen. Zum Verschliessen der Öffnung zur Mahlgutkammer ist an der Oberseite des Gewürzspenders ein Deckel vorgesehen, der um eine Welle der Pfeffermühle herumzuschwenken ist, um die Öffnung zur Mahlgutkammer freizugeben. Die Gewürzkammer ist als separates Teil zur Gewürzmühle mit Mahlgutkammer ausgebildet und weist an ihrer Unterseite eine Stopfen zum Verschliessen einer Einfüllöffnung auf. Die Streuöffnung der Gewürzkammer ist seitlich der Gewürzkammer ausgebildet und durch einen zusätzlichen Deckel verschliessbar. Bei dieser Gewürzstreudose ist eine einzige Gewürzkammer vorgesehen. Zur Betätigung der Gewürzmühle dient eine an der Oberseite der Dose gelagerte Kurbel.

Eine derartige Gewürzstreudose ist unhandlich und lässt sich nicht als einzige Einheit mit niedrigen Kosten herstellen.

Die DE-A Nr. 2413900 beschreibt einen Gewürzspender mit mehreren ringförmig um eine zentrale Kammer angeordneten Gewürzfächern. Die zentrale Kammer dient als Senffach und ermöglicht nicht die Aufnahme einer Gewürzmühle.

Der Erfindung liegt die Aufgabe zugrunde, einen Gewürzspender gemäss dem Oberbegriff des Patentanspruchs 1 derart zu verbessern, dass er besonders kompakt ist, es erlaubt, auch mehrere verschiedene Gewürzfächer mit einer Gewürzmühle zu kombinieren und in der Handhabung möglichst einfach ist.

Diese Aufgabe wird erfindungsgemäss durch die Merkmale im kennzeichnenden Teil des Patentanspruchs 1 gelöst.

Weitere Ausgestaltungen des Gewürzspenders ergeben sich aus den Unteransprüchen.

Der Gewürzspender hat sehr kompakten Aufbau und weist insbesondere geringe Höhe auf, obgleich er zusätzlich zu den Gewürzfächern eine Gewürzmühle mit Mahlgutkammer enthält. Das Nachfüllen sowohl der Gewürzfächer als auch der Mahlgutkammer lässt sich auf einfache Weise ohne Demontage von Teilen des Mahlwerks oder der Gewürzfächer ausführen.

Die Handhabung des Gewürzspenders ist dadurch wesentlich vereinfacht, dass er an seiner Unterseite einen die Standfläche des Gewürzspenders bildenden verdrehbaren Ring aufweist, der mit dem Mahlwerk gekuppelt ist.

Bei einer ersten Ausführungsform ist die Mahlgutkammer konzentrisch in der Dose vorgesehen und die Gewürzfächer sind ringförmig um die Mahlgutkammer herum angeordnet. Eine zweite Ausführungsform hat vorteilhafterweise eine von der Mahlgutkammer seitlich ausgehende und bis zur Dose reichende Erweiterung, wodurch der Gewürzspender eine grössere Menge an zu mahlendem Gut aufnehmen kann und darüber hinaus das Mahlgut von der Aussenseite her im Falle einer Dose aus durchsichtigem Material optisch erkennbar ist.

Nach einer weiteren Ausführungsform ist die Gewürzmühle zusammen mit der Mahlgutkammer exzentrisch in der Dose vorgesehen.

Bei einer weiteren Ausgestaltung nimmt der Gewürzspender eine Einwegmühle auf, so dass ein Austausch der Gewürzmühle möglich ist.

Im folgenden werden bevorzugte Ausführungsformen des Gewürzspenders an Hand der Zeichnung beschrieben.

Es zeigen:

Fig. 1 einen Längsschnitt durch eine erste Ausführungsform eines Gewürzspenders;

Fig. 2 eine Querschnittsansicht entlang der Linie II-II des Gewürzspenders nach Fig. 1;

Fig. 3 und 4 Ansichten von Teilen eines Deckels des Gewürzspenders;

Fig. 5 eine Seitenansicht des in Fig. 4 gezeigten Teiles des Deckels;

Fig. 6 eine Querschnittsansicht einer abgewandelten Ausführungsform des Gewürzspenders;

Fig. 7 eine Querschnittsansicht durch eine weiter abgewandelte Ausführungsform des Gewürzspenders, und

Fig. 8 eine Längschnittansicht einer weiteren Ausführungsform des Gewürzspenders.

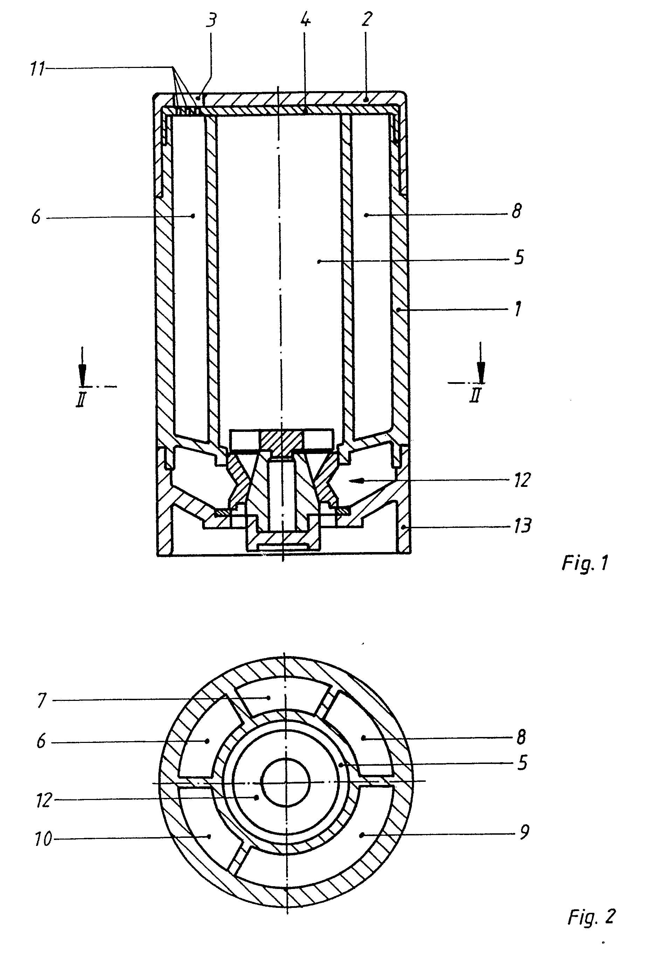

Die Fig. 1 und 2 zeigen eine erste Ausführungsform eines Gewürzspenders, der eine Dose 1 aufweist, auf welche von oben her abnehmbar und drehbar ein Deckel 2 gestülpt ist. Der Deckel 2 besitzt einen Durchlass 3 in seiner Stirnseite nahe an seinem äusseren Rand und sitzt auf einem Zwischendeckel 4. Der Zwischendeckel 4 deckt eine mittig in der Dose 1 vorgesehene Mahlgutkammer sowie Gewürzfächer 6 bis 10 ab.

Die Gewürzfächer 6 bis 10 legen nach oben hin Streuauslässe 11 fest. Durch die Drehung des Deckels 2 wird der Durchlass 3 in Überdeckung mit jeweils einem der Streuauslässe 11 verbracht, wobei jeder Streuauslass 11 einem der Gewürzfächer 6 bis 10 sind, so dass aus dem jeweils angewählten Gewürzfach ein Gewürz ausgestreut werden kann.

In der Dose 1 ist unterhalb der Mahlgutkammer 5 ein Mahlwerk 12 vorgesehen, in welches Mahlgut aus der Mahlgutkammer 5 gelangen kann. Ein Ring 13 von etwa gleichem Durchmesser wie die Dose 1 ist an der Unterseite der Dose 1 drehbar gehaltert und dient dazu, durch Drehung mit der Hand das Mahlwerk 12 zu betätigen. Durch Hochheben des Gewürzspenders und Drehung des Ringes 13 rieselt das gemahlene Gut aus dem an der unteren Stirnseite der Dose ausgebildeten Mahlgutauslass heraus.

Die Fig. 1 und 2 zeigen, dass die Mahlgutkammer 5 konzentrisch in der Dose 1 ausgebildet ist und von ringförmig um die Mahlgutkammer 5 herum angeordneten Gewürzfächern 6 bis 10 umgeben wird. Sowohl die Dose 1 als auch die Mahlgutkammer 5 haben zylindrischen Querschnitt.

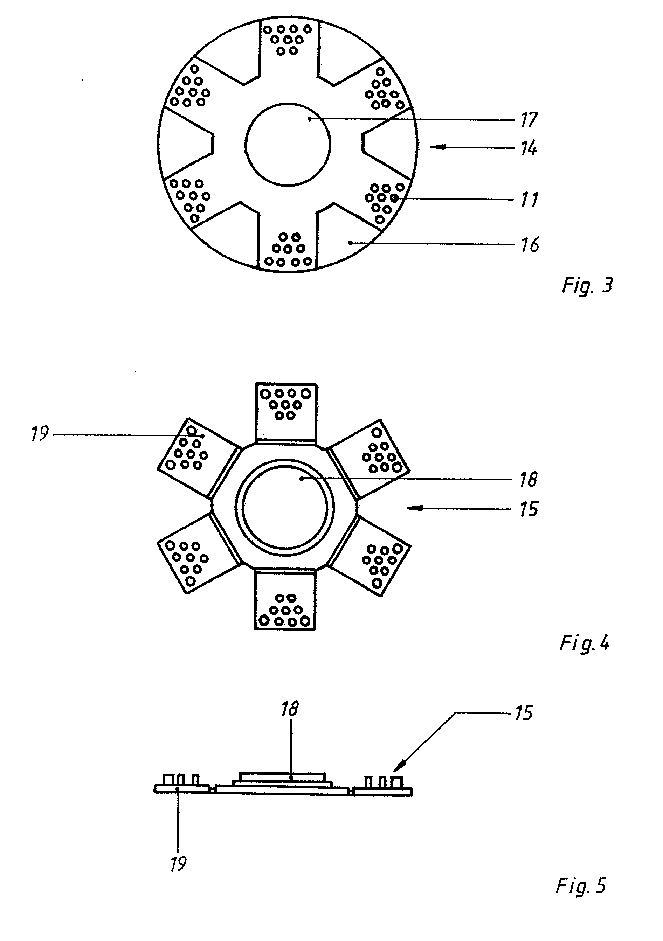

Fig. 3 und 4 zeigen Einzelheiten des die Dose 1 an ihrer Oberseite abschliessenden Deckels. Der Deckel besteht aus einem Grundkörper 14 und einem Kunststoffbauteil 15, wobei Fig. 3 den Grundkörper 14 und Fig. 4 das Kunststoffbauteil 15 im Detail veranschaulichen. Der aus dem Grundkörper 14 und dem Kunststoffbauteil 15 gebildete Deckel kann den in Verbindung mit Fig. 1 gezeigten und aus den Teilen 2, 4 bestehenden Deckel ersetzen.

Der Grundkörper 14 hat aussenseitig in etwa dreieckige, erhabene Bereiche, zwischen welchen sich die Streuauslässe der einzelnen Gewürzfächer 6 bis 10 befinden. Im mittleren Bereich ist im Grundkörper 14 ein zylindrisches Loch 17 ausgebildet, durch das die Mahlgutkammer 5 aufgefüllt werden kann.

Das in Fig. 4 und 5 gezeigte Kunststoffbauteil 15 wird derart auf den Grundkörper 14 gesetzt, dass es mit einem mittigen, kurzen Halsstück 18 in dem zylindrischen Loch 17 sitzt und die Klappen 19 die Streuauslässe 11 verschliessen. Wenn man aus einem Gewürzfach Gewürz entnehmen will, ist die zugeordnete Klappe 19 durch Anheben zu öffnen. Zum Nachfüllen von Mahlgut in die Mahlgutkammer 5 wird das Kunststoffbauteil 15 vom Grundkörper 14 entfernt, wodurch das Loch bzw. die Öffnung 17 freigegeben wird.

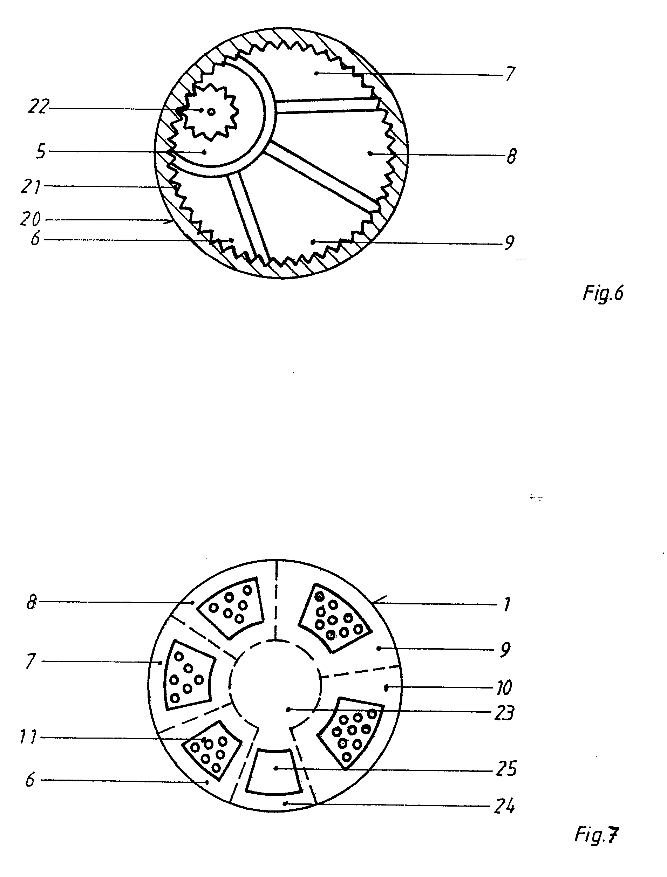

Bei der in Fig. 6 gezeigten Ausführungsform ist die Mahlgutkammer 5 aussermittig gegenüber der Dose 1 vorgesehen. Zum Antrieb des ebenfalls aussermittig angeordneten Mahlwerkes der Gewürzmühle dient ein Betätigungsring 20, der, wie der Ring 13 bei der Ausführungsform nach Fig. 1, an der Dose 1 drehbar gehalten ist. Der Betätigungsring 20 ist mit einer Innenverzahnung 21 versehen, in die ein Ritzel 22 greift, über welches das Mahlwerk angetrieben wird. Der Gewürzspender nach Fig. 6 weist zusätzlich zur Mahlgutkammer 5 vier Gewürzfächer 6 bis 9 auf, wobei das Gewürzfach 8 wesentlich grösser als die Gewürzfächer 6 und 7 sind und beispielsweise zur Aufbewahrung von Salz dienen kann.

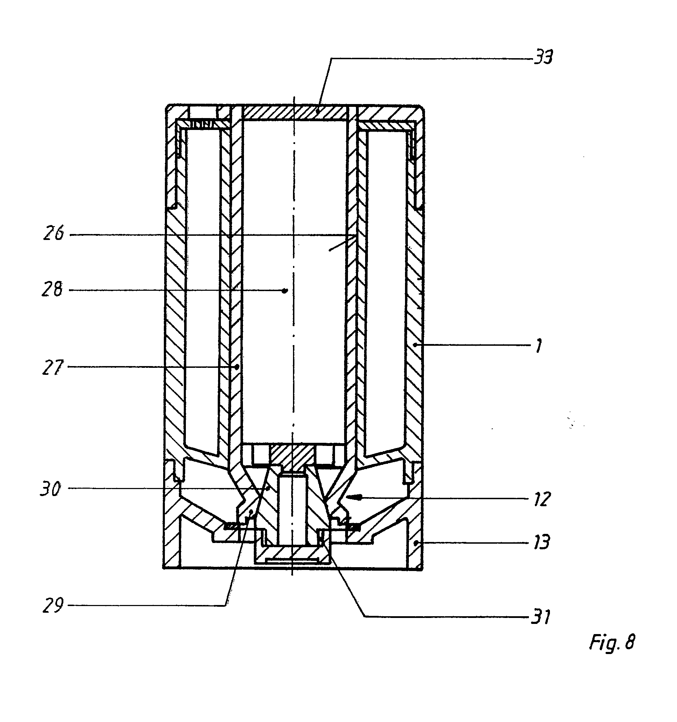

Die in Fig. 7 dargestellte Ausführungsform enthält eine mittige Mahlgutkammer 23. Die Mahlgutkammer 23 ist mit einer Erweiterung 24 versehen, die bis zur Mantelfläche der Dose 1 reicht. Um die erweiterte Mahlgutkammer 23 herum sind ringförmig die Gewürzfächer 6 bis 10 vorgesehen. Im Bereich der Erweiterung 24 ist auf der Stirnfläche der Dose 1 anstelle eines Streuauslasses eine Einfüllöffnung 25 ausgebildet, die vorzugsweise durch eine der in den Fig. 4 und 5 gezeigten Klappen 19 verschliessbar ist.

Fig. 8 zeigt eine weitere Ausführungsform des Gewürzspenders. Anstelle einer mittigen, zylindrischen Mahlgutkammer ist ein mittiger Schacht 26 vorgesehen, in welchen eine Einwegmühle 27 von oben her einsetzbar ist. Die Einwegmühle 27 besitzt eine Mahlgutkammer 28 und ein Mahlwerk 12, welches aus einem feststehenden Mahlkonus 29 und einem drehfähigen Kegel 30 besteht. Nach dem Einschieben der Einwegmühle 27 in den Schacht 26 greift der Kegel 30 mit einer Verzahnung 31 in eine entsprechende Verzahnung des verdrehbaren Ringes 13, so dass eine Drehung des Ringes 13 zu einem Drehen des Kegels 30 und damit zu einer Betätigung der Einwegmühle 27 führt.

Die Einwegmühle 27 ist nach oben durch einen Stopfen 33 geschlossen. Es ist natürlich auch möglich, die Einwegmühle 27 mittels Klappen oder auf beliebige andere Weise zu verschliessen.

## Patentansprüche

1. Gewürzspender, welcher in einer Dose (1) in horizontaler Richtung nebeneinander liegend ein mit einem Streuauslass (11) versehenes Gewürzfach für ein streufähiges Gewürz und eine Gewürzmühle mit einer Mahlgutkammer enthält und bei dem sich der Mahlgutauslass an der unteren Stirnseite der Dose (1) befindet, dadurch gekennzeichnet, dass mehrere Gewürzfächer (6 bis 10) vorgesehen sind, die gemeinsam mit der Mahlgutkammer (5; 23; 28) der Gewürzmühle (12; 27) in der Dose (1) angeordnet sind, dass die Gewürzfächer (6 bis 10) an der oberen Stirnseite der Dose (1) ausgebildete Einfüllöffnungen aufweisen, dass die Streuauslässe (11) der Gewürzfächer (6 bis 10) durch einen Deckel (2, 4; 14, 15) und die Einfüllöffnungen an der oberen Stirnseite der Dose (1) festgelegt sind, dass zur Betätigung der Gewürzmühle (5, 12) ein relativ zur Dose (1) verdrehbarer Ring (13, 20) vorgesehen ist, dessen untere Stirnfläche die Standfläche des Gewürzspenders bildet und dessen Aussendurchmesser etwa gleich dem Durchmesser der Dose (1) ist.

2. Gewürzspender nach Anspruch 1, dadurch gekennzeichnet, dass die Dose (1) zylindrisch ausgebildet ist.

3. Gewürzspender nach Anspruch 2, dadurch gekennzeichnet, dass die Mahlgutkammer (5) konzentrisch in der Dose (1) als zylindrische Kammer in der Mitte der Dose (1) vorgesehen ist und dass die Gewürzfächer (6 bis 10) ringförmig um die Mahlgutkammer (5) herum angeordnet sind.

4. Gewürzspender nach einem der Ansprüche 1 bis 3, dadurch gekennzeichnet, dass der Deckel (2, 4) gegenüber der Dose (1) verdrehbar ist und einen Durchlass (3) aufweist, der durch Drehung des Deckels (2, 4) in Überdeckung mit einem beliebigen der Streuauslässe (11) zu bringen ist.

5. Gewürzspender nach einem der Ansprüche 1 bis 3, dadurch gekennzeichnet, dass der Deckel (14, 15) Klappen (19) zum Verschliessen der Streuauslässe (11) aufweist.

6. Gewürzspender nach Anspruch 5, dadurch gekennzeichnet, dass die Klappen (19) einstückig mit einem separaten Kunststoffbauteil (15) ausgebildet sind, welches auf einen Grundkörper (14) des Deckels (14, 15) aufgesetzt ist und durch das zugleich eine Füllöffnung (17) der Mahlgutkammer (5) verschlossen ist, wenn sich das Kunststoffbauteil (15) auf dem Grundkörper befindet.

7. Gewürzspender nach Anspruch 6, dadurch gekennzeichnet, dass als Füllöffnung (17) für die Mahlgutkammer (5) ein mittiges Loch im Grundkörper (14) vorgesehen ist, und dass das Kunststoffbauteil (15) mit einem Halsstück (18) in das mittige Loch (17) eingreift.

8. Gewürzspender nach Anspruch 1, dadurch gekennzeichnet, dass die Gewürzmühle aussermittig in der Dose (1) angeordnet ist und mit einem Ritzel (22) in eine Innenverzahnung (21) des Betätigungsringes (20) greift.

9. Gewürzspender nach einem der Ansprüche 1 bis 7, dadurch gekennzeichnet, dass die mittige Mahlgutkammer (23) mit einer Erweiterung (24) bis zur Mantelfläche der Dose (1) reicht.

10. Gewürzspender nach Anspruch 9, dadurch gekennzeichnet, dass auf der Stirnfläche der Dose (1) im Bereich der Erweiterung (24) eine Einfüllöffnung (25) für die Mahlgutkammer (23) vorgesehen und diese Einfüllöffnung (25) durch eine an dem Deckel (14, 15) der Dose (1) vorgesehene Klappe (19) verschliessbar ist.

11. Gewürzspender nach einem der Ansprüche 1 bis 10, dadurch gekennzeichnet, dass die Dose (1) im Bereich der Gewürzfächer (6 bis 10) und der Mahlgutkammer (5) mehreckig ausgebildet ist.

12. Gewürzspender nach einem der Ansprüche 1 bis 11, dadurch gekennzeichnet, dass die Gewürzmühle als Einwegmühle (27) in einen Schacht (26) der Dose (1) eingesetzt ist und in Einbaustellung mit dem verdrehbaren Ring (13) kuppelt.

## Claims

1. Spice dispenser containing, side by side in a horizontal direction in a container (1), a spice compartment provided for a spice which can be sprinkled, and equipped with a sprinkling outlet (11) and a spice mill with a chamber for the grinding goods, in which dispenser the outlet for the ground goods is situated on the lower end face of the container (1), characterised in that several spice compartments (6, 10) are provided, which are arranged in the container (1) together with the grinding goods chamber (5; 23; 28) of the spice mill (12; 27), in that the spice compartments (6 to 10) have feed openings at the upper end face of the container (1), in that the sprinkling outlets (11) of the spice compartments (6 to 10) are held by a lid (2, 4; 14, 15) and the feed openings (are held) at the upper end face of the container (1), in that a ring (13, 20) rotatable relative to the container (1) is provided for operating the spice mill (5, 12), the lower end face of which ring forms the stand for the spice dispenser while the external diameter of said ring is approximately equal to the diameter of the container (1).

2. Spice dispenser according to Claim 1, characterised in that the container (1) is cylindrical.

3. Spice dispenser according to Claim 2, characterised in that the grinding goods chamber (5) is arranged concentrically in the container (1) as cylindrical chamber at the centre of the container (1) and in that the spice compartments (6 to 10) are arranged in a ring round the grinding goods chamber (5).

4. Spice dispenser according to one of the Claims 1 to 3, characterised in that the lid (2, 4) is rotatable relative to the container (1) and has a opening (3) which can be brought into alignment with any of the sprinkling outlets (11) by rotation of the lid (2, 4).

5. Spice dispenser according to one of the Claims 1 to 3, characterised in that the lid (14, 15) has flaps (19) for closing the sprinkling outlets (11).

6. Spice dispenser according to Claim 5, characterised in that the flaps (19) are made in one piece with a separate plastics part (15) which is placed on a base (14) of the lid (14, 15) and which at the same time closes a feed opening (17) of the grinding goods chamber (5) when the plastics part (15) is placed on the base.

7. Spice dispenser according to Claim 6, characterised in that the feed opening (17) for the grinding goods chamber (5) is a central aperture in the base (14) and in that the plastics part (15) has a neck (18) engaging in the central aperture (17).

8. Spice dispenser according to Claim 1, characterised in that the spice mill is situated eccentrically in the container (1) and engages by a pinion (22) in an internal toothing (21) of the operating ring (20).

9. Spice dispenser according to one of the Claims 1 to 7, characterised in that the central grinding goods chamber (23) has an extension (24) by which it extends to the wall of the container (1).

10. Spice dispenser according to Claim 9, characterised in that a feed opening (25) for the grinding goods chamber (23) is provided at the end face of the container (1), in the region of the extension (24), and this feed opening (25) can be closed by a flap (19) provided on the lid (14, 15) of the container (1).

11. Spice dispenser according to one of the Claims 1 to 10, characterised in that the container (1) is polygonal in the region of the spice compartments (6 to 10), and of the grinding goods chamber (5).

12. Spice dispenser according to one of the Claims 1 to 11, characterised in that the spice mill is inserted as a one-way mill (27) in a shaft (26) of the container (1) and couples with the rotatable ring (13) when in the assembled position.

## Revendications

1. Saupoudreur à épices contenant à l'intérieur d'une boîte (1), en juxtaposition horizontale, d'une part un compartiment à épices muni d'un orifice de saupoudrage (11) destiné à une épice pouvant être saupoudrée et, d'autre part, un moulin à épices comprenant une chambre pour la matière moulue, saupoudreur à épices dans lequel l'orifice de la matière moulue se trouve sur le côté frontal inférieur de la boîte (1), caractérisé par le fait que plusieurs compartiments à épices (6 à 10) sont prévus disposés, en commun avec la chambre contenant la matière moulue (5; 23; 28) du moulin à épices (12; 27) à l'intérieur de la boîte (1), par le fait que les compartiments à épices (6 à 10) présentent sur le côté frontal supérieur de la boîte (1) des orifices de remplissage, par le fait que la position des orifices de saupoudrage (11) des compartiments à épices (6 à 10) est définie sur le côté frontal supérieur de la boîte (1) par un couvercle (2, 4; 14, 15) et les orifices de remplissage, par le fait que pour manœuvrer le moulin à épices (5, 12) une bague (13, 20) tournant par rapport à la boîte (1) est prévue, bague dont la suface frontale inférieure constitue le plan de pose du saupoudreur à épices et dont le diamètre extérieur est approximativement égal au diamètre de la boîte (1).

2. Saupoudreur à épices selon la revendication 1, caractérisé par le fait que la boîte (1) est de forme cylindrique.

3. Saupoudreur à épices selon la revendication 2, caractérisé par le fait que la chambre (5) contenant la matière moulue est prévue concentriquement à l'intérieur de la boîte (1) sous la forme d'une chambre cylindrique placée au centre de ladite boîte (1) et par le fait que les compartiments à épices (6 à 10) sont disposés de manière circulaire tout autour de la chambre (5) contenant la matière moulue.

4. Saupoudreur à épices selon l'une des revendications 1 à 3, caractérisé par le fait que le couvercle (2, 3) est rotatif par rapport à la boîte (1) et présente un passage (3) qui, grâce à la rotation du couvercle (2, 4), doit venir recouvrir l'un quelconque des orifices de saupoudrage (11).

5. Saupoudreur à épices selon l'une des revendications 1 à 3, caractérisé par le fait que le couvercle (13, 14) présente des clapets (19) destinés à obturer les orifices de saupoudrage (11).

6. Saupoudreur à épices selon la revendication 5, caractérisé par le fait que les clapets (19) forment une seule pièce avec un élément de construction séparé en matière plastique (15) qui est monté sur un corps de base (14) du couvercle (14, 15) et qui a pour effet d'obturer simultanément un orifice de remplissage (17) de la chambre (5) lorsque l'élément de construction en matière plastique (15) se trouve sur ledit corps de base (14).

7. Saupoudreur à épices selon la revendication 6, caractérisé par le fait que, comme orifice de remplissage (17) de la chambre (5), est prévu un trou central pratiqué dans le corps de base (14) et par le fait que l'élément en matière plastique (15) pénètre dans le trou central (17) au moyen d'un élément en forme de collier (18).

8. Saupoudreur à épices selon la revendication 1, caractérisé par le fait que le moulin à épices est disposé de manière décentrée à l'intérieur de la boîte (1) et s'engrène au moyen d'un pignon (22) dans une denture interne (21) de la bague de manœuvre.

9. Saupoudreur à épices selon l'une des revendications 1 à 7, caractérisé par le fait que la chambre centrale (23) contenant la matière moulue atteint par l'élargissement (24) l'enveloppe de la boîte (1).

10. Saupoudreur à épices selon la revendication 9, caractérisé par le fait que, sur la surface frontale de la boîte (1), dans la zone de l'élargissement (24), est prévu un orifice de remplissage (25) pour la chambre (23) contenant la matière moulue et par le fait que cet orifice de remplissage (25) peut être obturé au moyen d'un clapet (19) prévu sur le couvercle (14, 15) de la boîte (1).

11. Saupoudreur à épices selon l'une des revendications 1 à 10, caractérisé par le fait que la boîte (1) a la forme d'un polygone dans la zone des compartiments à épices (6 à 10) et de la chambre (5) recevant la matière moulue.

12. Saupoudreur à épices selon l'une des revendications 1 à 11, caractérisé par le fait que le moulin à épices est monté dans un puits (26) de la boîte (1) formant un moulin à une seule voie (27) et s'accouple, dans la position de montage, à la bague rotative (13).

Fig. 1

Fig. 2

Fig. 3

Fig. 4

Fig. 5

Fig.6

Fig.7

Fig. 8